# EUROPEAN PATENT SPECIFICATION

(11) **EP 4 272 903 B1**
(45) Date of publication and mention of the grant of the patent: **16.07.2025**
(21) Application number: 23171393.4
(22) Date of filing: 03.05.2023
(51) Int. Cl.: B25H 3/04

(54) **WALL-MOUNTABLE STORAGE SYSTEM**
WANDMONTIERBARES LAGERSYSTEM
SYSTÈME DE STOCKAGE POUVANT ÊTRE MONTÉ SUR UN MUR

(30) Priority: 04.05.2022 US 202263338319 P
(43) Date of publication of application: 08.11.2023
(73) Proprietor: Techtronic Cordless GP, Anderson, SC 29621 (US)
(72) Inventor: IRWIN, Connor S., Anderson, 29621 (US); WILLIAMS, Brianna E., Anderson, 29621 (US); SANDOVAL, Gabriel J., Anderson, 29621 (US); KNIGHT, Tyler H., Anderson, 29621 (US); RABAGO, Raquel M., Anderson, 29621 (US); POLITTE, Benjamin G., Anderson, 29621 (US); DUONG, Ho Quynh Chau, Anderson, 29621 (US); GROVES, Jeffery, Anderson, 29621 (US); BRYAN, Frederick W., Anderson, 29621 (US); JENKINS, J. Luke, Anderson, 29621 (US); HANKS, Nicolas J., Anderson, 29621 (US); MOK, Kwok Ting, Kwai Chung (HK); TSE, Ying Chung, Kwai Chung (HK); MOK, Man Kit, Kwai Chung (HK)
(74) Representative: Novagraaf Group

(56) References cited:
- EP-A1- 3 427 902
- WO-A1-2011/103635
- DE-U1- 202010 016 696
- US-A- 5 533 843
- US-A1- 2009 212 737
- US-A1- 2015 041 464
- US-A1- 2016 099 590
- US-A1- 2022 040 842
- US-A1- 2022 102 995

## Description

### RELATED APPLICATIONS

This application claims the benefit of U.S. Provisional Patent Application No. 63/338,319, filed May 4, 2022.

### FIELD

Embodiments herein relate to storage systems.

Some examples are known from EP 3 427 902 A1, US 2016/099590 A1, US 5 533 843 A, US 2015/041464 A1 or US 2022/040842 A1.

The preamble of claims 1 and 12 is shown by US 2009/212737 A1.

### SUMMARY

Modular accessories and storage systems allow users to create customized solutions for organizing their homes, garages, work vehicles, and/or other spaces. For example, users can install modular storage systems including customized arrangements of power tools, bins, shelves, hooks and/or the like to create an organized space that fits the user's specific needs. Additionally, users of power tools may have one or more battery packs to pair with different power tools. Traditional multi-port chargers enables users to charge multiple battery packs at once. However, such chargers and battery packs may consume large amounts of counter and/or shelf space.

Conventional wall-hanging chargers often rely on screws or similar fasteners driven into the supporting surface, and therefore lack flexibility in repositioning the wall-hanging charger as the user's storage needs change. Additionally, screws and other conventional wall-hanging solutions may be prone to accidental dislodging from the supporting surface when the user attempts to remove the battery pack from the wall-hanging charger.

Therefore, one example provides a wall-mountable storage system including a first storage structure configured to mount to a wall, the first storage structure including a modular accessory interface and an alignment interface. The system also includes a modular accessory configured to engage with and be supported by the modular accessory interface. The first storage structure is configured to receive power from an external power source and output power to the modular accessory.

In some aspects, the first storage structure is configured to align with a second storage structure, the second storage structure includes charging circuitry configured to charge a battery pack, and the first storage structure is configured to provide power to the second storage structure.

In some aspects, the modular accessory includes a primary charging module electrically connectable to the first storage structure and configured to couple to and charge a power tool battery pack.

In some aspects, the primary charging module is slidably coupleable to a secondary charging module in a vertical direction, and the primary charging module is configured to provide electrical power from the first storage structure to the secondary charging module.

In some aspects, the secondary charging module includes a foldable leg configured to support the secondary charging module against a wall.

In some aspects, the primary charging module is a first primary charging module, the modular accessory includes a second primary charging module configured to engage with and be supported by a second modular accessory interface of the first storage structure, and the second primary charging module is electrically connected to the first primary charging module.

In some aspects, the second primary charging module is electrically connected to the first primary charging module by a cable.

In some aspects, the primary charging module is a dual bay charging module configured to charge two power tool battery packs.

In some aspects, when removed from the first storage structure, the primary charging module is coupleable to a modular accessory interface of a tool box.

In some aspects, the modular accessory includes a power tool including a battery, and the first storage structure is configured to charge the battery via the modular accessory interface.

In some aspects, the modular accessory includes a power tool storage accessory configured to support and charge a power tool.

In some aspects, the modular accessory includes a shelving unit including one or more shelves and integrated charging circuitry, the shelving unit configured to receive electrical power from the first storage structure and output electrical power to a power tool battery pack using the integrated charging module.

In some aspects, the shelving unit includes a work light configured to receive electrical power from at least one selected from a group consisting of the first storage structure and a power tool battery pack.

In some aspects, the wall is at least one selected from a group consisting of a wall of a building, a wall of vehicle, and a wall of a trailer.

Another example provides a wall-mountable storage system including a first storage structure configured to mount to a wall. The first storage structure includes integrated charging circuitry, a battery pack interface configured to charge a battery pack, and an alignment interface. The second storage structure is configured to receive power from an external power source and output power to the modular accessory.

In some aspects, the battery pack interface includes at least one selected from the group consisting of a first battery pack interface configured to engage with a battery pack of a first voltage and a second battery pack interface configured to engage with a battery pack of a second voltage, wherein the first voltage is different from the second voltage.

In some aspects, the battery pack interface is configured to selectively charge a battery pack of a first voltage and a battery pack of a second voltage, wherein the first voltage is different from the second voltage.

In some aspects, the first storage structure includes a universal serial bus port.

In some aspects, the first storage structure includes an alternating current power output port.

In some aspects, the first storage structure includes a shelf.

In some aspects, the wall is at least one selected from a group consisting of a wall of a building, a wall of vehicle, a wall of a trailer, a wall of a tool box.

### BRIEF DESCRIPTION OF THE DRAWINGS

FIG. 1 illustrates a wall-mountable storage system including a modular storage structure and a first example integrated charging storage structure, according to some aspects.
FIG. 2 illustrates a wall-mountable storage system including a modular storage structure and a second example integrated charging storage structure, according to some aspects.
FIG. 3 illustrates a wall-mountable storage system including a modular storage structure and a third example integrated charging storage structure, according to some aspects.
FIG. 4 illustrates a wall-mountable storage system including a modular storage structure and a fourth example integrated charging storage structure, according to some aspects.
FIG. 5 illustrates a perspective view of a modular storage structure and a charging module, according to some aspects.
FIG. 6 illustrates a side view of a modular storage structure and a charging module, according to some aspects.
FIG 7 illustrates a rear view of a charging module, according to some aspects.
FIG. 8 illustrates an electrical connection of a plurality of charging modules on a modular storage structure, according to some aspects.
FIG. 9 illustrates an electrical connection of a plurality of charging modules on a modular storage structure, according to some aspects.
FIG. 10 illustrates an electrical connection of a plurality of charging modules on a modular storage structure, according to some aspects.
FIG. 11 illustrates a charging module included in a tool box system, according to some aspects.
FIG. 12 illustrates a wall-mountable storage system storing power tools, according to some aspects.
FIG. 13 illustrates a wall-mountable storage system for wirelessly charging a power tool, according to some aspects.
FIG. 14 illustrates a wall-mountable storage system for wirelessly charging a power tool, according to some aspects.
FIG. 15 illustrates a power tool storage accessory mountable to a modular storage structure, according to some aspects.
FIG. 16 illustrates a wall-mountable storage system including a power tool storage accessory, according to some aspects.
FIG. 17 illustrates a wall-mountable storage system including a shelving unit, according to some aspects.

### DETAILED DESCRIPTION

Before any embodiments are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

Features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

It should also be understood that although certain drawings illustrate hardware and software located within particular devices, these depictions are for illustrative purposes only. In some embodiments, the illustrated components may be combined or divided into separate software, firmware, and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links.

Thus, in the claims, if an apparatus or system is claimed, for example, as including an electronic processor or other element configured in a certain manner, for example, to make multiple determinations, the claim or claim element should be interpreted as meaning one or more electronic processors (or other element) where any one of the one or more electronic processors (or other element) is configured as claimed, for example, to make some or all of the multiple determinations. To reiterate, those electronic processors and processing may be distributed.

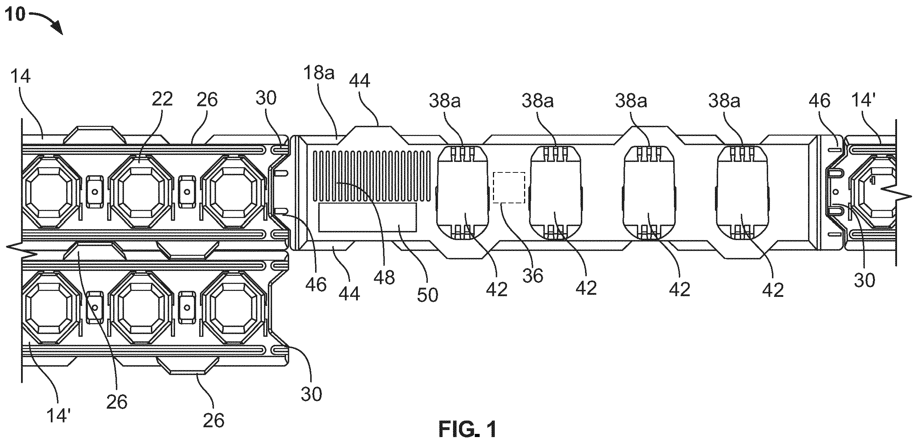

FIG. 1 illustrates a wall-mountable modular storage system 10 according to some aspects. The wall-mountable modular storage system 10 includes at least one modular storage structure 14 and a first example of an integrated charging storage structure18a, each configured to mount to a wall. In some instances, the storage system 10 does not include the integrated charging storage structure 18a. In other instances, the storage system 10 does not include the modular storage structure 14. The wall may be a wall of a building, a garage, a trailer, a work vehicle, another storage module, or another surface suitable for supporting the wall-mountable storage system 10. The modular storage structure 14 and/or the integrated charging storage structure 18a may be implemented as a wall panel, tracks, a board, a rail, or a combination thereof. For simplicity, the modular storage structure 14 may be otherwise referred to herein as a modular rail. Similarly, the integrated charging storage structure 18a (as well as other examples of integrated charging storage structures described herein) may be referred to as an integrated charging rail.

The modular storage structure 14 includes a modular accessory interface 22 having a plurality of mounting interfaces. For example, the modular accessory interface 22 may include at least one of a plurality of protrusions (e.g., hanging structures, projections, cleats, and/or the like), a plurality of slots, a plurality of through-holes, a plurality of recessed portions, and/or the like. Examples of the plurality of mounting interfaces that may be included in the modular accessory interface 22 can be found in U.S. Patent Application No. 18/047,498, filed October 18, 2022, the entire content of which is incorporated herein by reference.

In some instances, the modular accessory interface 22 includes protrusions (e.g., hanging structures, projections, cleats, and/or the like) repeated along the length of the modular storage structure 14. Alternatively, or in addition, the modular accessory interface 22 may include spaces between two adjacent protrusions. Alternatively, or in addition, the modular accessory interface 22 may include depressions in the surface of the modular storage structure 14. In some instances, modular accessory interface 22 includes a substantially rectangular shape. However, other geometries of the modular accessory interface 22 (e.g., squares, triangles, hexagons, trapezoids, etc.) are contemplated. The modular accessory interface 22 is operable to engage with and/or support one or more modular accessories (examples of which are detailed below).

In some embodiments, the modular storage structure 14 is coupleable in a horizontal and/or a vertical direction to another wall-mountable storage structure (e.g., another modular storage structure 14' and/or the integrated charging storage structure 18a). For example, the modular storage structure 14 includes at least one vertical alignment interface 26 for coupling the modular storage structure 14 to another storage structure in a vertical direction. The modular storage structure 14 may also include at least one horizontal alignment interface 30 for coupling the modular storage structure 14 to another storage structure in a horizontal direction. A user may couple a desired number of storage structures together in horizontal and/or vertical directions to customize the modular storage system 10. In some instances, the modular storage structure 14 does not couple to another storage structure, but rather is positioned adjacent to and aligned with another storage structure by way of the vertical alignment interface 26 and/or the horizontal alignment interface 30.

In some embodiments, the modular storage structure 14 may be electrically connectable to an eternal power source (e.g., an alternating current (AC) power source and/or a direct current (DC) power source) and configured to output power to a modular accessory and/or to another storage structure (e.g., another modular storage structure 14' and/or the integrated charging storage structure 18a) of the modular storage system 10.

The integrated charging storage structure 18a includes integrated charging circuitry 36 and at least one battery pack interface 38a configured to engage with and charge one or more battery packs 42, one or more power tools (e.g., internal or external battery packs included in a power tool), and/or one or more standalone batteries. In some instances, the integrated charging storage structure 18a receives power directly from an external power source and outputs the power to the one or more battery packs 42. In some instances, the integrated charging storage structure 18a receives power from another storage structure (e.g., a modular storage structure 14 or another integrated charging storage structure) and outputs the power to the one or more battery packs 42 via the battery pack interface 38a. In this way, the charging of electrical components can be built into and/or integrated with wall-mountable modular storage system 10 without the need for having a separate charger or charging area, thus, optimizing and better organizing the use of space within a user's workshop, garage, office, etc.

The integrated charging storage structure 18a may be coupleable in a horizontal and/or a vertical direction to another wall-mountable storage structure (e.g., a modular storage structure 14 and/or another integrated charging storage structure 18a) in a manner substantially similar to that of the modular storage structure 14 described above. For example, the integrated charging storage structure 18a includes at least one vertical alignment interface 44 for aligning or coupling the integrated charging storage structure 18 with another storage structure in a vertical direction. The integrated charging storage structure 18a also includes at least one horizontal alignment interface 46 for aligning or coupling the integrated charging storage structure 18 with another storage structure in a horizontal direction.

The integrated charging storage structure 18a may include an airflow vent 48 for allowing hot air to exit (or ambient air to enter) the integrated charging storage structure 18a. In some instances, the integrated charging storage structure 18a includes an internal fan operable to direct hot air out of an internal cavity of the integrated charging storage structure 18 though the vent 48. The integrated charging storage structure 18a may also include one or more indicators 50 for displaying a status of the integrated charging storage structure 18a and/or the one or more battery packs 42. For example, the indicators 50 may include one or more light emitting diodes (LEDs) for indicating a charge status of the one or more battery packs 42, indicating that the integrated charging storage structure 18a is connected to power, and indicating an occurrence of one or more abnormalities with the charging storage structure 18a and/or one or more battery packs 42.

In some instances, a battery pack engaged with the integrated charging storage structure 18a may provide power to other built-in components of the integrated charging storage structure 18a, such as, for example, one or more built-in work lights. In some instances, the integrated charging storage structure 18a includes a switch for powering on and off one or more of the built-in components (e.g., LEDs, built-in work lights, etc.).

In the example illustrated in FIG. 1, the integrated charging storage structure 18a includes four battery pack interfaces 38a configured to charge 18 volt (V) battery packs. However, the integrated charging storage structure 18a may include more than four battery pack interfaces 38a or less than four battery pack interfaces 38a. Additionally, in some instances, the integrated charging storage structure 18a may be operable to charge battery packs of other voltages (e.g., 4 V, 18 V, 40 V, 80 V), types, capacities, and/or sizes. The integrated charging storage structure 18a may be operable to charge each of the battery packs 42 in parallel with one another or sequentially. For example, the integrated charging storage structure 18a may include a button or switch for selectively switching between sequential charging and parallel charging. In some instances, the integrated charging storage structure 18a also includes a modular accessory interface substantially similar to the modular accessory interface 22 of the modular storage structure 14.

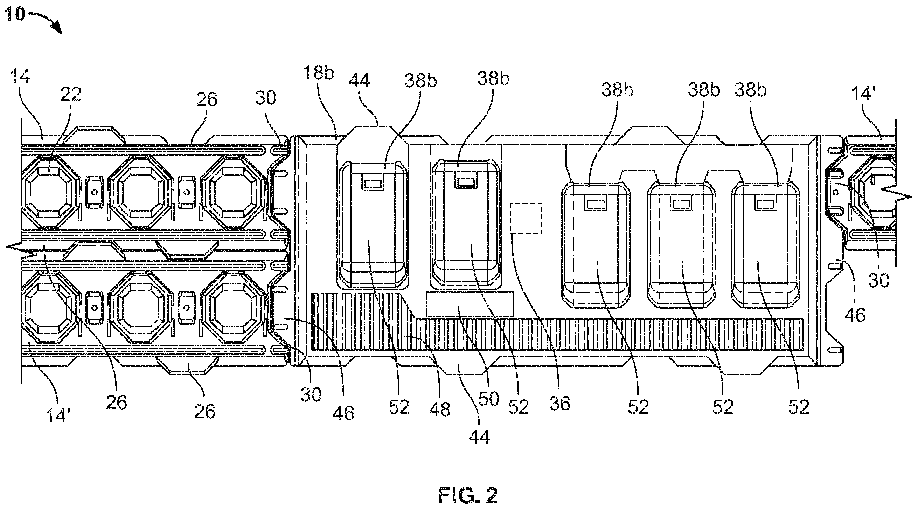

In the example illustrated in FIG. 1, the at least one battery pack interface 38a is configured to engage with and charge 18 volt (V) battery packs 42. However, the battery packs 42 are not limited to 18 V battery packs. For example, FIG. 2 illustrates a second example of an integrated charging storage structure 18b including a plurality of battery pack interfaces 38b configured to receive 40 V battery packs 52. Similar components of the first example integrated charging storage structure 18a and the second example integrated charging storage structure 18b are identified with common reference numerals. In the example illustrated in FIG. 2, the integrated charging storage structure 18b includes a plurality (illustrated as five in the example of FIG. 2) of battery pack interfaces 38b configured to charge the 40 V battery packs 52. However, the integrated charging storage structure 18b may include more than five battery pack interfaces 38b (e.g., six battery pack interfaces, eight battery pack interfaces, etc.) or less than five battery pack interfaces 38b (e.g., four battery pack interfaces). For example, the integrated charging storage structure 18b includes at least one battery pack interface 38b. The integrated charging storage structure 18b may be operable to charge each of the battery packs 52 in parallel with one another or sequentially. For example, the integrated charging storage structure 18b may include a button or switch for selectively switching between sequential charging and parallel charging. In some instances, the integrated charging storage structure 18b also includes a modular accessory interface substantially similar to the modular accessory interface 22 of the modular storage structure 14.

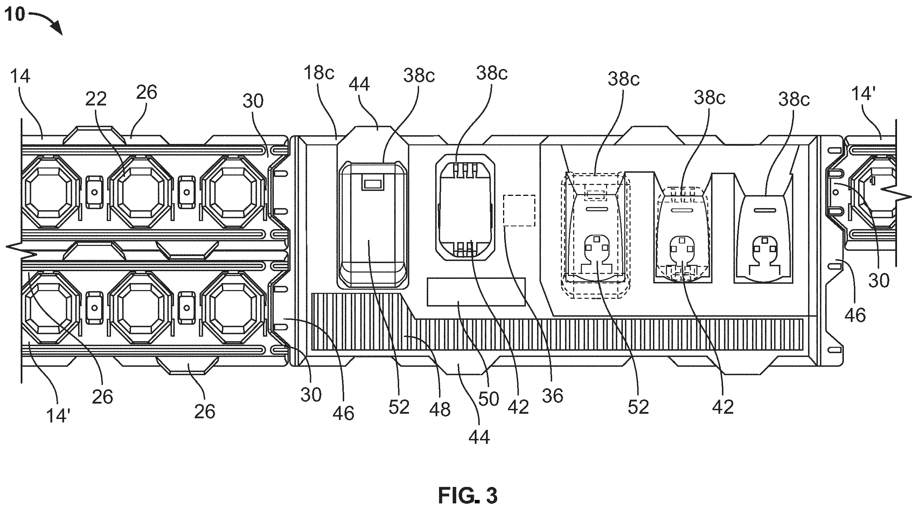

Referring now to FIG. 3, a third example of an integrated charging storage structure 18c that may be included in the storage system 10 is illustrated. Similar components of the first example integrated charging storage structure 18a, the second example integrated charging storage structure 18b, and the third example integrated charging storage structure 18c are identified with common reference numerals. The integrated charging storage structure 18c includes at least one battery pack interface 38c configured to selectively receive, for example 18 V battery packs 42, 40 V battery packs 52, and/or battery packs of another voltage (e.g., 4 V battery packs, 12 V battery packs, 80 V battery packs). In some instances, in addition to the battery pack interface 38c, the integrated charging storage structure 18c also includes at least one battery pack interface 38c configured to receive only 18 V battery packs and/or at least one battery pack interface 38c configured to receive only 40 V battery packs. The integrated charging storage structure 18c may be operable to charge each of 18 V battery packs 42 and the 40 V battery packs 52 in parallel with one another or sequentially. For example, the integrated charging storage structure 18c may include a button and/or switch for selectively switching between sequential charging and parallel charging. Alternatively or in addition, the integrated charging storage structure 18c may include a button and/or switch for selectively switching between charging the 18 V battery packs 42 first and charging the 40 V battery packs 52 first. In some instances, the integrated charging storage structure 18c also includes a modular accessory interface substantially similar to the modular accessory interface 22 of the modular storage structure 14.

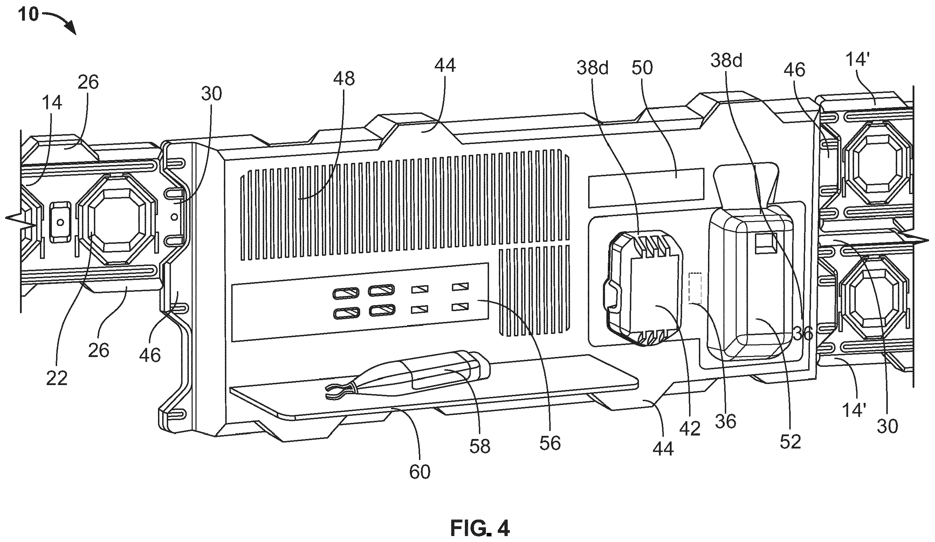

Referring now to FIG. 4, a fourth example of an integrated charging storage structure 18d that may be included in the storage system 10 is illustrated. Similar components of the first example integrated charging storage structure 18a, the second example integrated charging storage structure 18b, the third example integrated charging storage structure 18c, and the fourth example integrated charging storage structure 18d are identified with common reference numerals.

The integrated charging storage structure 18d may include one or more battery pack interfaces 38d configured to engage with and charge a battery pack, such as the 18 V battery pack 42 and/or the 40 V battery pack 52. In some instances, each battery pack interface 38d may be configured to receive only battery packs of a certain voltage rating (e.g., only 18 V battery packs or only 40 V battery packs). Alternatively, or in addition, one or more battery pack interfaces 38d may be configured to selectively receive battery packs different voltage ratings.

The integrated charging storage structure 18d may also include a plurality of universal serial bus (USB) port 56 for outputting DC current to an external device. In the illustrated example, the integrated charging storage structure 18d includes a plurality (illustrated as eight in the illustrated example) of USB ports 56. However, the number of USB ports included in the integrated charging storage structure 18d may be more than eight or less than eight. Alternatively, or in addition to the at least one USB port 56, the integrated charging storage structure 18d may include at least one AC power output port and/or other power output ports. The at least one USB port 56 and/or the at least one AC power output port may be included in the integrated charging storage structure 18d alternative to, or in addition to, the at least one battery pack interface 38d. In some instances, the integrated charging storage structure 18d also includes shelf 60 for storing one or more objects (e.g., power tool 58). The integrated charging storage structure 18d may be operable to charge each of 18 V battery packs 42 and the 40 V battery packs 52 in parallel with one another or sequentially. For example, the integrated charging storage structure 18d may include a button or switch for selectively switching between sequential charging and parallel charging. Alternatively, or in addition, the integrated charging storage structure 18d may include a button or switch for selectively switching between charging the 18 V battery packs 42 first and charging the 40 V battery packs 52 first. In some instances, the integrated charging storage structure 18d also includes a modular accessory interface substantially similar to the modular accessory interface 22 of the modular storage structure 14.

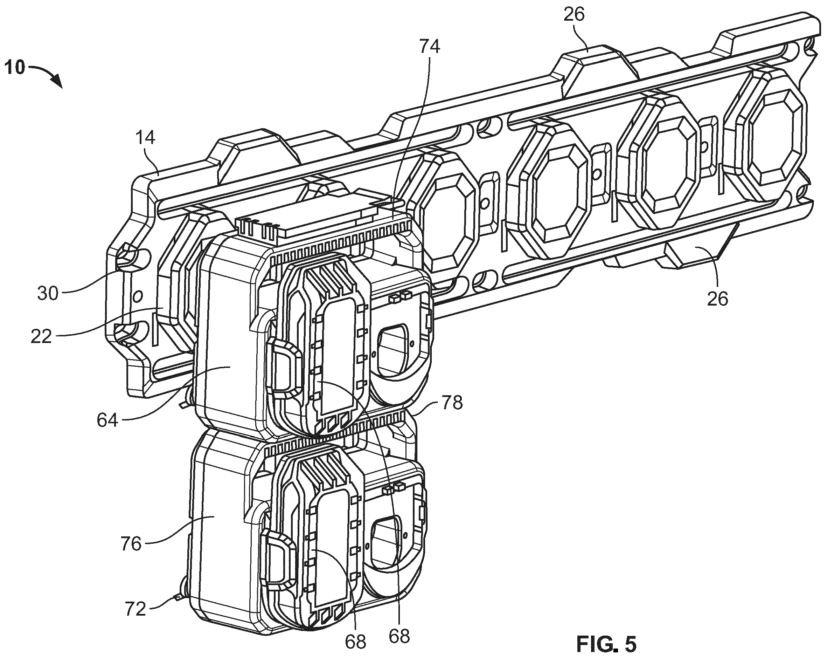

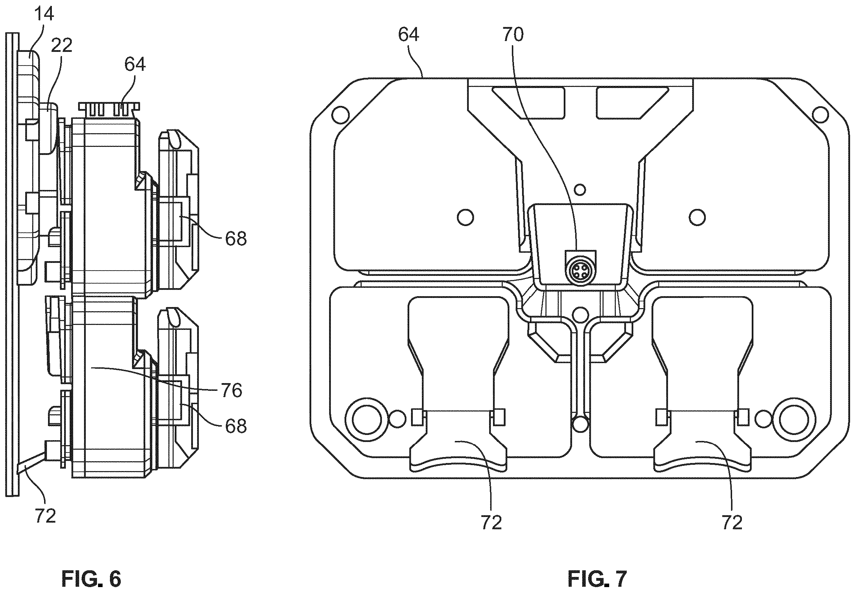

Referring now to FIGS. 5 and 6, respectively illustrating a perspective view and a side view of the modular storage structure 14, the modular storage structure 14 includes a modular accessory interface 22 configured to engage with one or more modular accessories, such as, for example, a primary charging module 64. The primary charging module 64 may be physically and electrically connectable to the modular storage structure 14 and includes integrated charging circuitry for charging at least one power tool battery pack 68. For example, FIG. 7 illustrates a rear view of the primary charging module 64. The primary charging module 64 may include a power input port 70 for electrically connecting to (e.g., using a power cable) the modular storage structure 14 in order to provide charging current to a battery pack 68. In some instances, the primary charging module 64 also includes at least one foldable leg 72 configured to support the primary charging module 64 against the wall.

Referring again to FIGS. 5 and 6, The primary charging module 64 may be a single-bay charging module operable to charge a single battery back 68, or a multi-bay charging module operable to charge (either in parallel or sequentially) multiple battery packs 68 (e.g., two battery packs, three battery packs, six battery packs, etc.). In the example illustrated in FIG. 5, the primary charging module 64 is a dual-bay charging module operable to charge up to two battery packs 68. In some instances, the primary charging module 64 includes a handle portion 74.

The primary charging module 64 may be operable to charge battery packs of different voltage ratings. For example, the primary charging module 64 may selectively receive at least one battery pack having a first voltage rating (e.g., 18 V) and at least one battery pack having a second voltage rating (e.g., 40 V). However, in some instances, the primary charging module 64 is operable to receive only battery packs having a particular voltage rating.

In some instances, the primary charging module 64 may be coupleable (e.g., slidably coupleable) to a secondary charging module 76 in a vertical direction. One or both of the primary charging module 64 and the secondary charging module 76 may include a locking mechanism (e.g., a button, a switch, a latch, etc.) for securing the secondary charging module 76 to the primary charging module 64. The secondary charging module 76 may be daisy-chained to the primary charging module 64 such that when the secondary charging module 76 is mechanically and electrically coupled to the primary charging module 64, the primary charging module 64 is operable to provide charging current from the modular storage structure 14 to the secondary charging module 76.

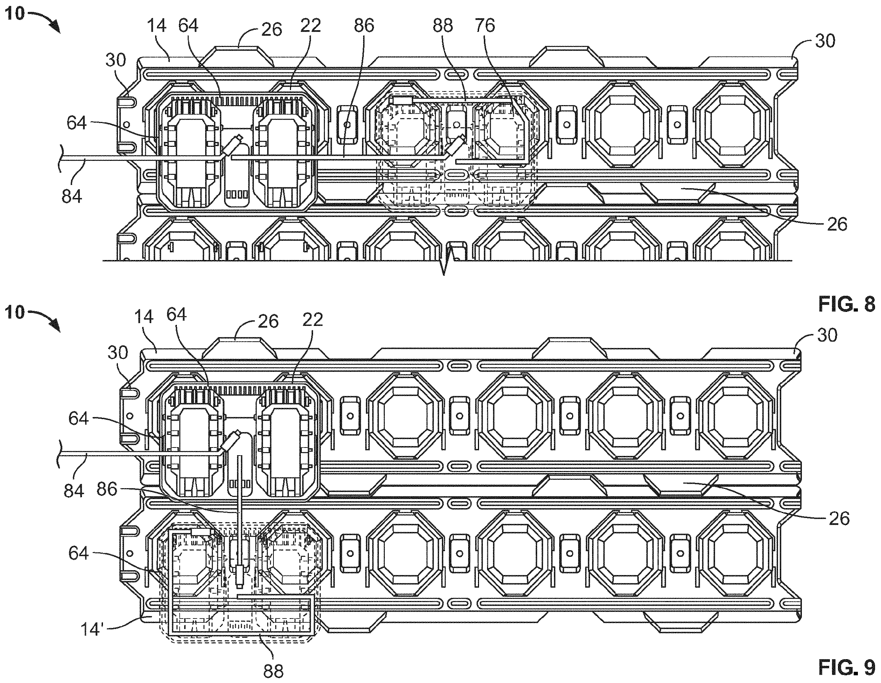

In some instances, the structure of the secondary charging module 76 is substantially similar to the primary charging module 64. For example, the secondary charging module 76 may also include integrated charging circuitry, a handle 78, and be mountable to, and electrically connectable to, the modular storage structure 14. However, in some instances, only the primary charging module 64 includes integrated charging circuitry while the secondary charging module 76 does not include integrated charging circuitry. For example, referring now to FIGS. 8, the secondary charging module 76 may be mountable to the modular storage structure 14, but not directly electrically connectable to the modular storage structure 14. The primary charging module 64 may be connected to a power input cable 84 for receiving power from an external power source and include a power output cable 86 for outputting charging current to the secondary charging module 76. A rear portion of the primary charging module 64 may include a cable guide member for storing the power output cable 86 when the power output cable 86 is not connected to another charging module.

In some instances, the secondary charging module 76 includes a power output cable 88 substantially similar to the power output cable 86 of the primary charging module 64 for outputting charging current, received from the primary charging module 64, to another charging module mounted to the same modular storage structure 14, or to another modular storage structure 14'. A rear portion of the secondary charging module 76 may include a cable guide member for storing the power output cable 88 when the power output cable 88 is not connected to another charging module.

The secondary charging module 76 may be mounted horizontally or vertically adjacent to the primary charging module 64 in order to receive charging current from the primary charging module 64. For example, FIG. 9 illustrates the primary charging module 64 mounted to a modular storage structure 14 and the secondary charging module 76 mounted to a modular storage structure 14' that is coupled to the modular storage structure 14 in a vertical direction. Similarly, the secondary charging module 76 may provide charging current, via the power output cable 88, to another charging module mounted vertically or horizontally adjacent to the secondary charging module 76.

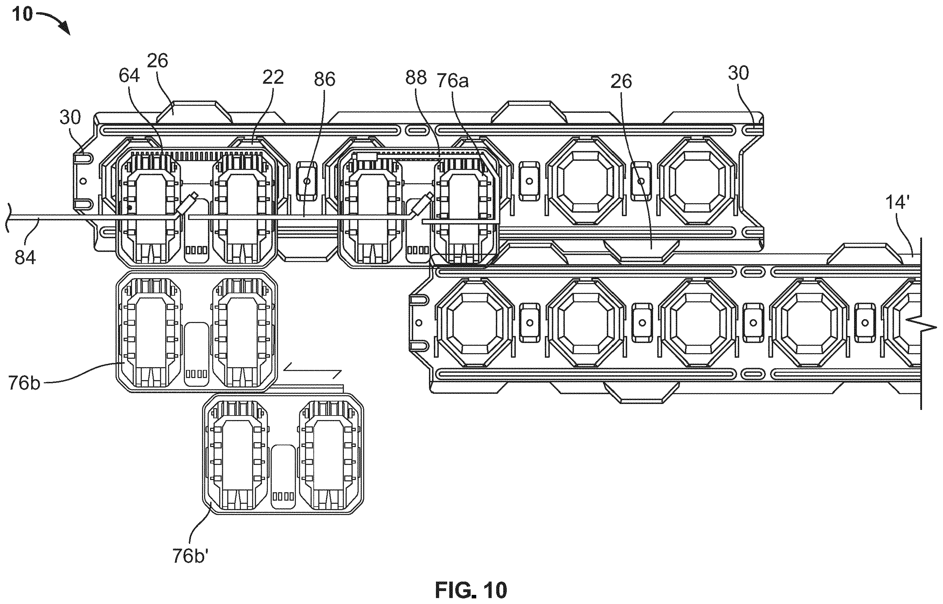

Referring now to FIG. 10, in some instances, the primary charging module 64 is electrically connectable to a mountable secondary charging module 76a and a slidable secondary charging module 76b. The slidable secondary charging module 76b may not include integrated charging circuitry and is not operable to be mounted to the modular storage structure 14 via the modular accessory interface 22. Rather, the slidable secondary charging module 76b is only slidably connectable to the primary charging module 64 for receiving charging from the primary charging module 64. The slidable secondary charging module 76b may also be slidably connectable in a vertical direction to an additional slidable charging module 76b' for providing charging current from the primary charging module 64 to the additional slidable charging module 76b'.

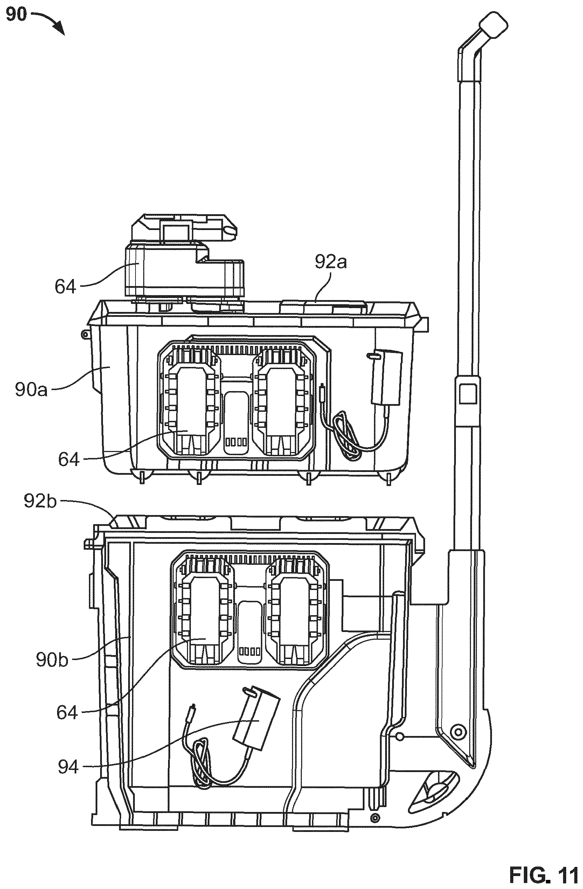

Referring now to FIG. 11, in some instances, when removed from the modular storage structure 14, the primary charging module 64 may be coupleable to a toolbox of a toolbox system 90. For example, one or both of a standalone toolbox 90a and a rolling toolbox 90b may respectively include a modular accessory interface 92a and/or 92b substantially similar to the modular accessory interface 22 described above with respect to FIG. 1. The standalone toolbox 90a and/or the rolling toolbox 90b are therefore operable to more efficiently store the primary charging module 64 and a charging module power cable 94 associated with the primary charging module 64 during, for example, transport to or from a worksite. The charging module power cable 94 may be operable to be routed an external power source (e.g., a wall outlet) through the modular storage structure 14 for providing electrical power to one or more modular accessories engaged with the modular storage structure 14 (e.g., the primary charging module 64).

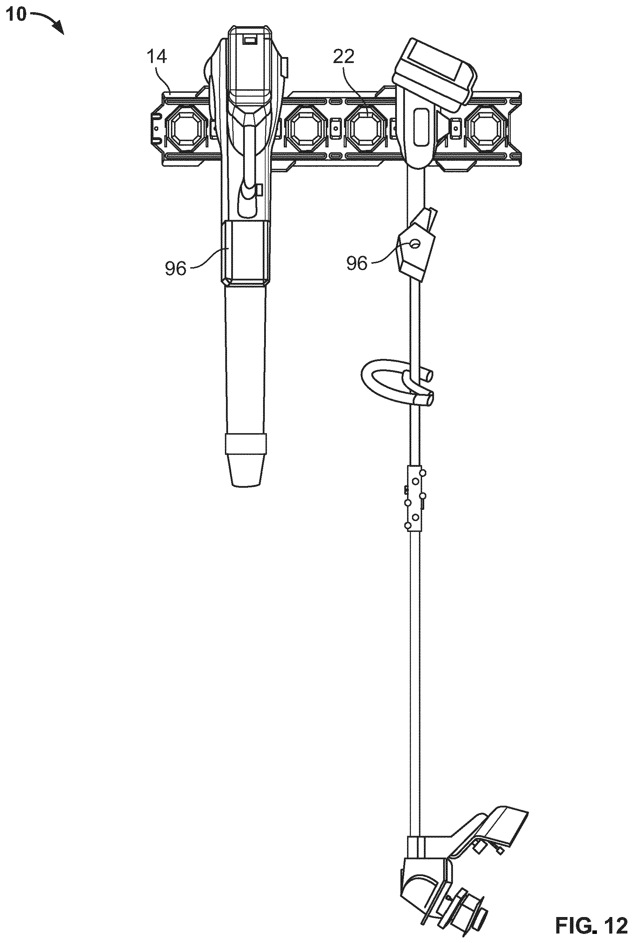

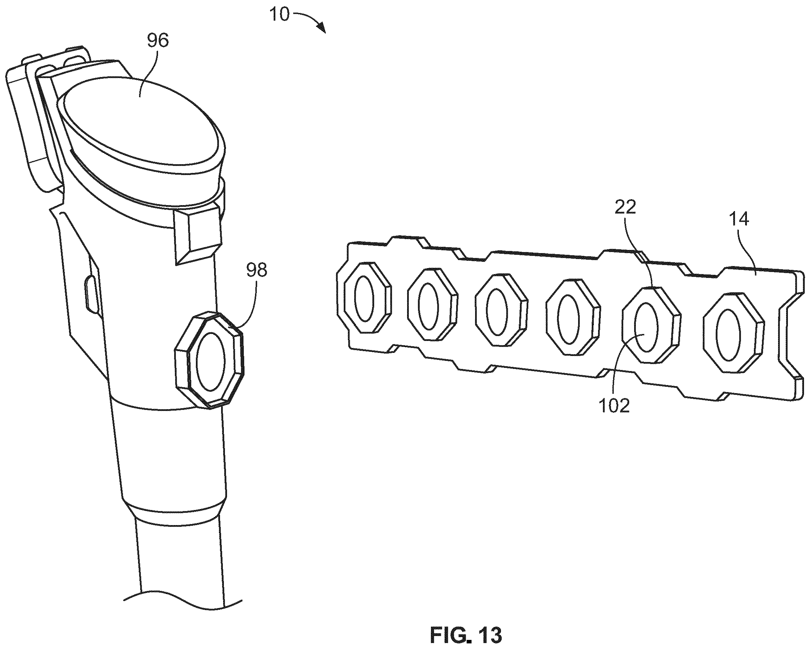

Referring now to FIG. 12, in some instances, the modular accessory interface 22 of the modular storage structure 14 may be operable to engage with and support one or more power tools 96. In some instances, the modular storage structure 14 is operable to charge (or provide power to) the one or more power tools 96. For example, as illustrated in FIG. 13, the tool 96 may include a mounting interface 98 configured to receive a protrusion of the modular accessory interface 22 of the modular storage structure 14. Each protrusion of the modular accessory interface 22 may include wireless charging circuitry 102 operable to provide power (for example, using inductive charging) to the tool 96 when the mounting interface 98 of the tool 96 is engaged with the modular accessory interface 22 of the modular storage structure 14. In some instances, the wireless charging circuitry 102 may be comprised of, or includes, wireless charging antenna/coils for inductive/wireless charging. Wireless charging capability, without the need for a separate charger or charging area in the modular storage structure 14, provides greater flexibility for the user to decide how storage space is used and to more easily modify how storage space is used as needed, while still providing the benefit of charging battery packs and/or tools while being stored.

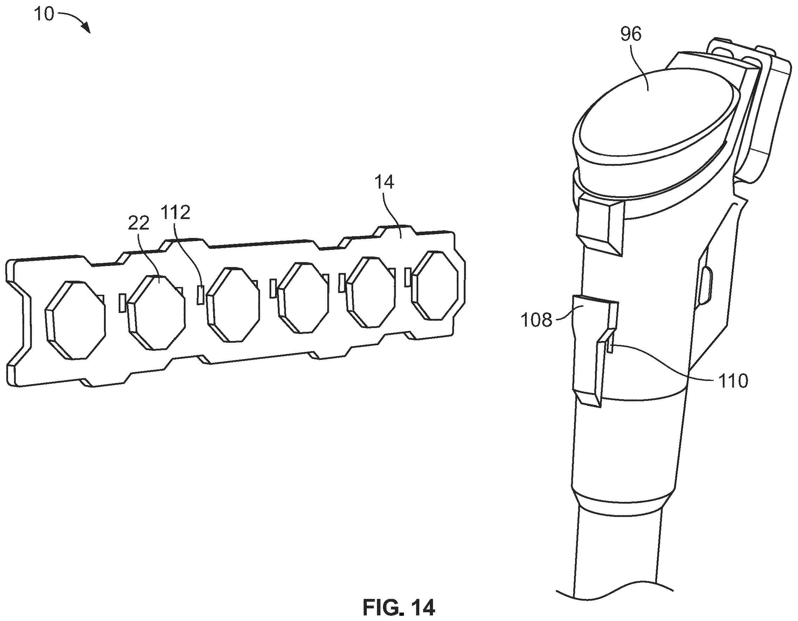

Referring now to FIG. 14, in some instances, the tool 96 includes a mounting interface 108 configured to be received in a space between two protrusions of the modular accessory interface 22. The mounting interface 108 may include one or more metal contacts 110 for engaging with one or more corresponding metal contacts 112 in the space between two protrusions of the modular accessory interface 22. When the one or more metal contacts 110 of the tool 96 is engaged with the one or more metal contact 112 of the modular accessory interface 22, the modular storage structure 14 is operable to charge a battery of the tool 96 (or provide power to the tool 96 to charge the battery). In other embodiments, the module storage structure 14 is configured to wirelessly charge (for example, using inductive charging) the one or more power tools 96. For example, in some instances, one or both of the tool 96 and the modular storage structure 14 do not include metal contacts for charging. Rather, the modular storage structure 14 is operable to wirelessly charge a battery pack of the tool 96 when the tool 96 is proximate the modular accessory interface 22.

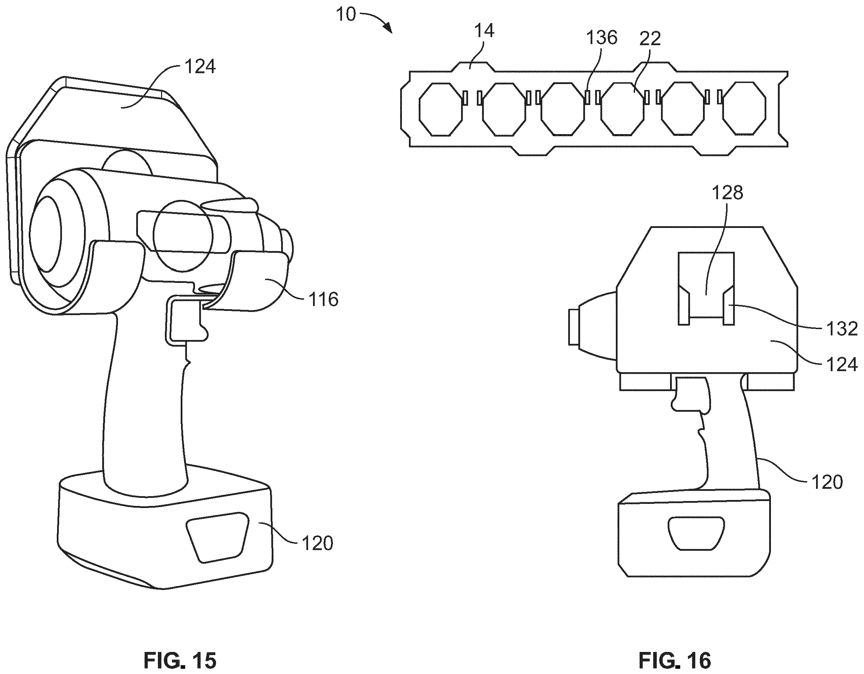

Referring now to FIG. 15, in some instances, the modular accessory interface 22 is operable to engage with and support a power tool storage accessory 116. The power tool storage accessory 116 is a tool-specific storage module configured to support a particular type of power tool 120. For example, in some instances the power tool storage accessory 116 is designed to support a power drill. However, the power tool storage accessory 116 may be designed to support other types of power tools (e.g., nailers, staplers, rotary hammers, saws, and the like), including outdoor power tools (e.g., blowers, mowers, trimmers, and the like).

The power tool storage accessory 116 may include a charging pad 124 for charging a battery of the power tool 120 via the modular storage structure 14. For example, as illustrated in FIG. 16, a rear portion of the charging pad 124 may include a mounting interface 128 for engaging with the modular accessory interface 22 of the modular storage structure 14. The charging pad 124 may include one or more charging contacts 132 (e.g., two charging contacts) adjacent the mounting interface 128 for engaging with one or more corresponding charging contacts 136 of the modular storage structure 14. When the one or more charging contacts 132 of the charging pad 124 is engaged with the one or more charging contacts 136 of the modular accessory interface 22, the modular storage structure 14 is operable to charge a battery of the tool 120 (or provide power to the tool 120 for charging the battery). In some embodiment, in lieu of charging contacts, the charging pad 124 may include wireless charging circuitry (e.g., inductive charging circuitry) for wirelessly charging the battery of the tool 120.

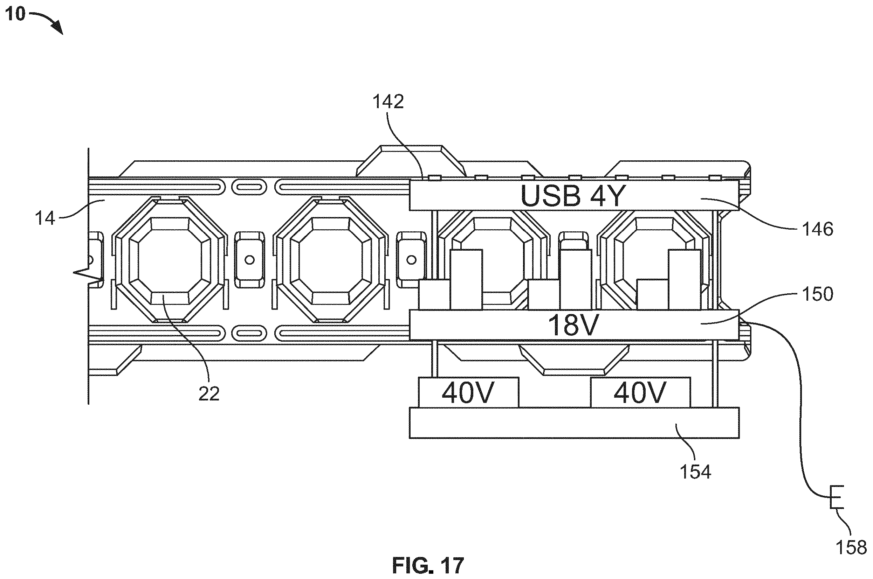

Referring now to FIG. 17, in some instances, the modular accessory interface 22 of the modular storage structure 14 is operable to engage with and support a shelving unit 142. The shelving unit 142 includes one or more shelves and, in some instances, integrated charging circuitry. For example, a first shelf 146 of the shelving unit 142 may include one or more USB ports operable to output DC power at a first voltage (e.g., approximately 5 V). A second shelf 150 of the shelving unit 142 may include one or more battery pack charging ports operable to output DC power at a second voltage higher than the first voltage (e.g., approximately 18 V). A third shelf 154 of the shelving unit 142 may include one or more charging ports operable to output DC power at a third voltage higher than the second voltage (e.g., approximately 40 V).

The shelves included in the shelving unit 142 may be operable to provide wired or wireless charging power to a battery pack engaged with the shelving unit 142 (or a battery pack coupled to a tool engaged with the shelving unit 142). For example, in some instances, the shelving unit 142 includes DC and/or AC electrical outlets. Alternatively or in addition, the shelving unit 142 may include one or more charging pads to charge a battery pack or other accessory (e.g., using inductive charging or charging contacts as discussed above).

The shelving unit 142 may receive power (e.g., wirelessly or via a power cable) from the modular storage structure 14. Alternatively, or in addition, the shelving unit 142 may receive power directly from an external power source (e.g., an AC power source or a DC power source) via a power cable 158. In some instances, the shelving unit 142 further includes one or more LED work lights powered by, for example, the modular storage structure 14, a external power source via the power cable 158, and/or one or more battery packs connected to the shelving unit 142.

In some instances, the shelves of the shelving unit 142 may be removeable. When removed, the shelves may be installed on, for example, rolling storage or an open storage structure (e.g., a storage crate) for transport. The removeable shelves may be arranged in the shelving unit 142 if different orders than illustrated in FIG. 17. For example, the user may rearrange the shelves of the shelving unit 142 as needed. In some instances, the shelves may be operable to slide or pivot to provide access and visibility to the user. In some instances, the shelving unit 142 may include drawers operable to pull out and/or pivot down to present stored objects, such as battery packs, to the user. In some instances, the shelving unit 142 further includes an AC power output port.

Although aspects of the present disclosure have been described in detail with reference to certain embodiments, variations and modifications exist within the scope and spirit of one or more independent aspects as described. Various features of the disclosure are set forth in the following claims.

When used in this specification and claims, the terms "comprises" and "comprising" and variations thereof mean that the specified features, steps or integers are included. The terms are not to be interpreted to exclude the presence of other features, steps or components.

## Claims

1. A wall-mountable storage system (10) comprising:
a first storage structure (14) configured to mount to a wall, the first storage structure (14) including a modular accessory interface (22) and **characterized by** an alignment interface (26, 30) for coupling the first storage structure (14) to another storage structure; and
a modular accessory (64) configured to engage with and be supported by the modular accessory interface (22);
wherein the first storage structure (14) is configured to receive power from an external power source and output power to the modular accessory (64).

2. The system (10) of claim 1, wherein
the first storage structure (14) is configured to align with a second storage structure (18a, 18b, 18c, 18d),
the second storage structure (18a, 18b, 18c, 18d) includes charging circuitry configured to charge a battery pack (42), and
the first storage structure (14) is configured to provide power to the second storage structure (18a, 18b, 18c, 18d).

3. The system (10) of claim 1 or claim 2, wherein the modular accessory (64) includes a primary charging module (64) electrically connectable to the first storage structure (14) and configured to couple to and charge a power tool battery pack (68).

4. The system (10) of claim 3, wherein the primary charging module (64) is slidably coupleable to a secondary charging module (76) in a vertical direction, and the primary charging module (64) is configured to provide electrical power from the first storage structure (14) to the secondary charging module (76).

5. The system (10) of claim 4, wherein the secondary charging module (76) includes a foldable leg (72) configured to support the secondary charging module (76) against a wall.

6. The system (10) of any one of claims 3 to 5, wherein
the primary charging module (64) is a first primary charging module (64),
the modular accessory (64) includes a second primary charging module (76) configured to engage with and be supported by a second modular accessory interface (22) of the first storage structure (14), and
the second primary charging module (76) is electrically connected to the first primary charging module.

7. The system (10) of claim 6, wherein the second primary charging module (76) is electrically connected to the first primary charging module by a cable (86).

8. The system (10) of any one of claims 3 to 7, wherein the (first) primary charging module is a dual bay charging module configured to charge two power tool battery packs (42); and/or
wherein when removed from the first storage structure (14), the primary charging module is coupleable to a modular accessory interface of a tool box.

9. The system (10) of any preceding claim, wherein the modular accessory (64) includes a power tool (58, 96, 120) including a battery, and the first storage structure (14) is configured to charge the battery via the modular accessory interface (22); and/or
wherein the modular accessory (64) includes a power tool storage accessory (116) configured to support and charge a power tool (58, 96, 120).

10. The system (10) of any preceding claim, wherein the modular accessory (64) includes a shelving unit (142) including one or more shelves (146, 150) and integrated charging circuitry, the shelving unit configured to receive electrical power from the first storage structure (14) and output electrical power to a power tool battery pack (42) using the integrated charging circuitry; optionally wherein the shelving unit (142) includes a work light configured to receive electrical power from at least one selected from a group consisting of the first storage structure (14) and a power tool battery pack (42).

11. The system (10) of any preceding claim, wherein the wall is at least one selected from a group consisting of a wall of a building, a wall of vehicle, and a wall of a trailer.

12. A wall-mountable storage system (10) comprising:
a first storage structure (14) configured to mount to a wall, the first storage structure (14) including integrated charging circuitry, a battery pack interface (38a, 38b, 38c, 38d) configured to charge a battery pack (42), and **characterized by** an alignment interface (26, 30) for coupling the first storage structure (14) to another storage structure;
wherein the first storage structure (14) is configured to receive power from an external power source and output power to a modular accessory (64).

13. The wall-mountable storage system (10) of claim 12, wherein the battery pack interface (38a, 38b, 38c, 38d) includes at least one selected from the group consisting of a first battery pack interface configured to engage with a battery pack (42) of a first voltage and a second battery pack interface configured to engage with a battery pack (42) of a second voltage, wherein the first voltage is different from the second voltage.

14. The system (10) of claim 12 or 13, wherein the battery pack interface is configured to selectively charge a battery pack (42) of a first voltage and a battery pack (42) of a second voltage, wherein the first voltage is different from the second voltage.

15. The system (10) of any of claims 12-14, wherein the first storage structure (14) includes a universal serial bus port; and/or
wherein the first storage structure (14) includes an alternating current power output port; and/or
wherein the first storage structure (14) includes a shelf; and/or
wherein the wall is at least one selected from a group consisting of a wall of a building, a wall of vehicle, a wall of a trailer, a wall of a tool box.

## Patentansprüche

1. Wandmontierbares Lagersystem (10), umfassend:
eine erste Lagerstruktur (14), die konfiguriert ist, um an einer Wand montiert zu werden, wobei die erste Lagerstruktur (14) eine modulare Zubehörschnittstelle (22) einschließt und **gekennzeichnet durch** eine Ausrichtungsschnittstelle (26, 30) zum Koppeln der ersten Lagerstruktur (14) mit einer anderen Lagerstruktur; und
ein modulares Zubehör (64), das konfiguriert ist, um mit der modularen Zubehörschnittstelle (22) in Eingriff zu stehen und durch diese gestützt zu werden;
wobei die erste Lagerstruktur (14) konfiguriert ist, um Leistung von einer externen Leistungsquelle zu empfangen und Leistung an das modulare Zubehör (64) abzugeben.

2. System (10) nach Anspruch 1, wobei
die erste Lagerstruktur (14) konfiguriert ist, um mit einer zweiten Lagerstruktur (18a, 18b, 18c, 18d) ausgerichtet zu sein,
die zweite Lagerstruktur (18a, 18b, 18c, 18d) eine Ladeschaltung einschließt, die konfiguriert ist, um einen Batteriepack (42) zu laden, und
die erste Lagerstruktur (14) konfiguriert ist, um die zweite Lagerstruktur (18a, 18b, 18c, 18d) mit Leistung zu versorgen.

3. System (10) nach Anspruch 1 oder 2, wobei das modulare Zubehör (64) ein primäres Lademodul (64) einschließt, das mit der ersten Lagerstruktur (14) elektrisch verbindbar ist und konfiguriert ist, um sich mit einem Elektrowerkzeugbatteriepack (68) zu koppeln und diesen zu laden.

4. System (10) nach Anspruch 3, wobei das primäre Lademodul (64) in einer vertikalen Richtung mit einem sekundären Lademodul (76) verschiebbar koppelbar ist und das primäre Lademodul (64) konfiguriert ist, um elektrische Leistung von der ersten Lagerstruktur (14) an das sekundäre Lademodul (76) bereitzustellen.

5. System (10) nach Anspruch 4, wobei das sekundäre Lademodul (76) ein klappbares Bein (72) einschließt, das konfiguriert ist, um das sekundäre Lademodul (76) an einer Wand zu stützen.

6. System (10) nach einem der Ansprüche 3 bis 5, wobei
das primäre Lademodul (64) ein erstes primäres Lademodul (64) ist,
das modulare Zubehör (64) ein zweites primäres Lademodul (76) einschließt, das konfiguriert ist, um mit einer zweiten modularen Zubehörschnittstelle (22) der ersten Lagerstruktur (14) in Eingriff zu stehen und durch diese gestützt zu werden, und
das zweite primäre Lademodul (76) mit dem ersten Primärlademodul elektrisch verbunden ist.

7. System (10) nach Anspruch 6, wobei das zweite primäre Lademodul (76) durch ein Kabel (86) mit dem ersten primären Lademodul elektrisch verbunden ist.

8. System (10) nach einem der Ansprüche 3 bis 7, wobei das (erste) primäre Lademodul ein Doppellademodul ist, das konfiguriert ist, um zwei Elektrowerkzeugbatteriepacks (42) zu laden; und/oder
wobei das primäre Lademodul, wenn es aus der ersten Lagerstruktur (14) entfernt wird, an eine modulare Zubehörschnittstelle eines Werkzeugkastens koppelbar ist.

9. System (10) nach einem der vorstehenden Ansprüche, wobei das modulare Zubehör (64) ein Elektrowerkzeug (58, 96, 120) einschließt, das eine Batterie einschließt, und die erste Lagerstruktur (14) konfiguriert ist, um die Batterie über die modulare Zubehörschnittstelle (22) aufzuladen; und/oder
wobei das modulare Zubehör (64) ein Elektrowerkzeuglagerzubehör (116) einschließt, das konfiguriert ist, um ein Elektrowerkzeug (58, 96, 120) zu stützen und zu laden.

10. System (10) nach einem der vorstehenden Ansprüche, wobei das modulare Zubehör (64) eine Regaleinheit (142) einschließt, die ein oder mehrere Regale (146, 150) und eine integrierte Ladeschaltung einschließt, wobei die Regaleinheit konfiguriert ist, um elektrische Leistung von der ersten Lagerstruktur (14) zu empfangen und unter Verwendung der integrierten Ladeschaltung elektrische Leistung an einen Elektrowerkzeugbatteriepack (42) auszugeben; optional wobei die Regaleinheit (142) eine Arbeitsleuchte einschließt, die konfiguriert ist, um elektrische Leistung von mindestens einem Element zu empfangen, das aus einer Gruppe ausgewählt ist, bestehend aus der ersten Lagerstruktur (14) und einem Elektrowerkzeugbatteriepack (42).

11. System (10) nach einem der vorstehenden Ansprüche, wobei die Wand mindestens eine ist, die aus der Gruppe ausgewählt ist, bestehend aus einer Wand eines Gebäudes, einer Wand eines Fahrzeugs und einer Wand eines Anhängers.

12. Wandmontierbares Lagersystem (10), umfassend:
eine erste Lagerstruktur (14), die konfiguriert ist, um an einer Wand montiert zu werden, wobei die erste Lagerstruktur (14) eine integrierte Ladeschaltung einschließt, eine Batteriepackschnittstelle (38a, 38b, 38c, 38d), die konfiguriert ist, um einen Batteriepack (42) zu laden, und
**gekennzeichnet durch** eine Ausrichtungsschnittstelle (26, 30) zum Koppeln der ersten Lagerstruktur (14) mit einer anderen Lagerstruktur;
wobei die erste Lagerstruktur (14) konfiguriert ist, um Leistung von einer externen Leistungsquelle zu empfangen und Leistung an ein modulares Zubehör (64) auszugeben.

13. Wandmontierbares Lagerstruktur (10) nach Anspruch 12, wobei die Batteriepackschnittstelle (38a, 38b, 38c, 38d) mindestens eines einschließt, das aus der Gruppe ausgewählt ist, bestehend aus einer ersten Batteriepackschnittstelle, die konfiguriert ist, um mit einem Batteriepack (42) einer ersten Spannung in Eingriff zu stehen, und einer zweiten Batteriepackschnittstelle, die konfiguriert ist, um mit einem Batteriepack (42) einer zweiten Spannung in Eingriff zu stehen, wobei sich die erste Spannung von der zweiten Spannung unterscheidet.

14. System (10) nach Anspruch 12 oder 13, wobei die Batteriepackschnittstelle konfiguriert ist, um einen Batteriepack (42) einer ersten Spannung und einen Batteriepack (42) einer zweiten Spannung selektiv zu laden, wobei sich die erste Spannung von der zweiten Spannung unterscheidet.

15. System (10) nach einem der Ansprüche 12 bis 14, wobei die erste Lagerstruktur (14) einen Universal-Serial-Bus-Anschluss einschließt; und/oder
wobei die erste Lagerstruktur (14) einen Wechselstrom-Leistungsausgabeanschluss einschließt; und/oder
wobei die erste Lagerstruktur (14) ein Regal einschließt; und/oder
wobei die Wand mindestens eine ist, die aus der Gruppe ausgewählt ist, bestehend aus einer Wand eines Gebäudes, einer Wand eines Fahrzeugs, einer Wand eines Anhängers, einer Wand eines Werkzeugkastens.

## Revendications

1. Système de stockage à montage mural (10) comprenant :
une première structure de stockage (14) conçue pour être montée sur un mur, la première structure de stockage (14) comportant une interface d'accessoires modulaires (22) et **caractérisée par** une interface d'alignement (26, 30) pour coupler la première structure de stockage (14) à une autre structure de stockage ; et
un accessoire modulaire (64) conçu pour s'engager dans l'interface de l'accessoire modulaire (22) et être supporté par celle-ci ;
dans lequel la première structure de stockage (14) est conçue pour recevoir de l'énergie d'une source d'énergie externe et fournir de l'énergie à l'accessoire modulaire (64).

2. Système (10) selon la revendication 1, dans lequel
la première structure de stockage (14) est conçue pour s'aligner sur une seconde structure de stockage (18a, 18b, 18c, 18d),
la seconde structure de stockage (18a, 18b, 18c, 18d) comporte un circuit de charge conçu pour charger une batterie (42), et
la première structure de stockage (14) est conçue pour alimenter la seconde structure de stockage (18a, 18b, 18c, 18d).

3. Système (10) selon la revendication 1 ou la revendication 2, dans lequel l'accessoire modulaire (64) comporte un module de charge primaire (64) pouvant être connecté électriquement à la première structure de stockage (14) et conçu pour se coupler à un bloc-batterie d'outil électrique (68) et le charger.

4. Système (10) selon la revendication 3, dans lequel le module de charge primaire (64) peut être couplé de manière coulissante à un module de charge secondaire (76) dans une direction verticale, et le module de charge primaire (64) est conçu pour fournir de l'énergie électrique de la première structure de stockage (14) au module de charge secondaire (76).

5. Système (10) selon la revendication 4, dans lequel le module de charge secondaire (76) comporte un pied pliable (72) conçu pour soutenir le module de charge secondaire (76) contre un mur.

6. Système (10) selon l'une quelconque des revendications 3 à 5, dans lequel
le module de charge primaire (64) est un premier module de charge primaire (64),
l'accessoire modulaire (64) comporte un second module de charge primaire (76) conçu pour s'engager dans une seconde interface d'accessoire modulaire (22) de la première structure de stockage (14), et être supporté par celle-ci, et
le second module de charge primaire (76) est connecté électriquement au premier module de charge primaire.

7. Système (10) selon la revendication 6, dans lequel le second module de charge primaire (76) est relié électriquement au premier module de charge primaire par un câble (86).

8. Système (10) selon l'une quelconque des revendications 3 à 7, dans lequel le (premier) module de charge primaire est un module de charge à deux baies conçu pour charger deux blocs-batteries d'outils électriques (42) ; et/ou
dans lequel, lorsqu'il est retiré de la première structure de stockage (14), le module de charge primaire peut être couplé à une interface d'accessoire modulaire d'une boîte à outils.

9. Système (10) selon toute revendication précédente, dans lequel l'accessoire modulaire (64) comporte un outil électrique (58, 96, 120) comportant une batterie, et la première structure de stockage (14) est conçue pour charger la batterie par l'intermédiaire de l'interface de l'accessoire modulaire (22) ; et/ou
dans lequel l'accessoire modulaire (64) comporte un accessoire de stockage d'outil électrique (116) conçu pour supporter et charger un outil électrique (58, 96, 120).

10. Système (10) selon toute revendication précédente, dans lequel l'accessoire modulaire (64) comporte une unité d'étagère (142) comportant une ou plusieurs étagères (146, 150) et un circuit de charge intégré, l'unité d'étagère conçue pour recevoir l'énergie électrique de la première structure de stockage (14) et délivrer l'énergie électrique à une batterie d'outil électrique (42) en utilisant le circuit de charge intégré ; facultativement, dans lequel l'unité d'étagère (142) comporte une lampe de travail conçue pour recevoir l'énergie électrique d'au moins un élément sélectionné dans un groupe constitué de la première structure de stockage (14) et d'une batterie d'outil électrique (42).

11. Système (10) selon toute revendication précédente, dans lequel la paroi est au moins l'une des parois choisies dans le groupe constitué d'une paroi de bâtiment, d'une paroi de véhicule et d'une paroi de remorque.

12. Système de stockage à montage mural (10) comprenant :
une première structure de stockage (14) conçue pour être montée sur un mur, la première structure de stockage (14) comportant un circuit de charge intégré, une interface de bloc-batterie (38a, 38b, 38c, 38d) conçue pour charger un bloc-batterie (42), et
**caractérisé par** une interface d'alignement (26, 30) pour coupler la première structure de stockage (14) à une autre structure de stockage ;
dans lequel la première structure de stockage (14) est conçue pour recevoir de l'énergie d'une source d'énergie externe et fournir de l'énergie à un accessoire modulaire (64).

13. Système de stockage mural (10) selon la revendication 12, dans lequel l'interface du bloc-batterie (38a, 38b, 38c, 38d) comporte au moins un élément choisi dans le groupe constitué d'une première interface de bloc-batterie conçue pour s'engager avec un bloc-batterie (42) d'une première tension et d'une seconde interface de bloc-batterie conçue pour s'engager avec un bloc-batterie (42) d'une seconde tension, dans lequel la première tension est différente de la seconde tension.

14. Système (10) selon la revendication 12 ou 13, dans lequel l'interface du bloc-batterie est conçue pour charger sélectivement un bloc-batterie (42) d'une première tension et un bloc-batterie (42) d'une seconde tension, dans lequel la première tension est différente de la seconde.

15. Système (10) selon l'une quelconque des revendications 12 à 14, dans lequel la première structure de stockage (14) comporte un port de bus série universel ; et/ou
dans lequel la première structure de stockage (14) comporte un port de sortie de courant alternatif ; et/ou
dans laquelle la première structure de stockage (14) comporte une étagère ; et/ou
dans lequel la paroi est au moins une paroi choisie dans un groupe constitué d'une paroi d'un bâtiment, d'une paroi d'un véhicule, d'une paroi d'une remorque, d'une paroi d'une boîte à outils.
